# EUROPEAN PATENT APPLICATION

(11) **EP 2 827 287 A1**
(43) Date of publication of application: **21.01.2015**
(21) Application number: 13176531.5
(22) Date of filing: 15.07.2013
(51) Int. Cl.: G06Q 10/08, G06Q 50/32, G06Q 30/02

(54) **Track and trace mail piece for registered mail and medicine wrapper**

(71) Applicant: Nederlandse Organisatie voor Toegepast -Natuurwetenschappelijk Onderzoek TNO, 2628 VK Delft (NL)
(72) Inventor: Smolander, Maria Helena, 2628 VK Delft (NL); Olkkonen, Juuso Tuomas, 2628 VK Delft (NL); Lewanczyk, Dawid, 2628 VK Delft (NL); Rentrop, Cornelis Hermanus Arnoldus, 2628 VK Delft (NL)
(74) Representative: Jansen, Cornelis Marinus

(57) **Abstract**

There is disclosed a personalized container package (1), e.g. mail piece or medicine wrapper. The container package (1) integrally comprises a transmitter (3), battery (4), status sensor (5,6), processor (7), clock (8), and memory (9). The transmitter (3) is arranged for wireless broadcasting of a status signal (Ss). The battery (4) is arranged for powering the transmitter (3). The status sensor (5,6) is arranged for sensing a change in status (Uo,Uid) of the container package (1). The processor (7) is arranged for receiving input from the status sensor (5,6) and modifying the status signal (Ss) by including status information (So,Sid) indicating the change in status (Uo,Uid). The clock (8) is operatively linked to the processor (7) for providing a progressing clock time (T). The memory (9) is operatively linked to the processor (7) for storing and retrieving a broadcast time (T0, T1) calculated according to a broadcast time interval (Tb). The processor (7) is arranged for controlling the transmitter (3) for repeatedly broadcasting the status signal (Ss) each instance that the clock time (T) coincides with the broadcast time (T0,T1).

## Description

### ACKNOWLEDGEMENT

The work leading to this invention has received funding from the European Community's Seventh Framework Programme under grant agreement n° NMP2-SE-2011-263078.

### FIELD AND BACKGROUND

The present disclosure relates to a personalized container package; a system and method for tracking a personalized container package; and a method for manufacturing a tracking device. The disclosure further relates to a mail piece and a medicine wrapper.

The term "personalized container package" is used herein to refer to a package suitable for containing a contents belonging to, or destined for, a specific person, e.g. owner or recipient of the package. The contents of the package can be contained therein, i.e. the package carries a contents, e.g. in an enclosure of the package. To store and/or access the contents, a sender and/or recipient can open the enclosure. The ownership and/or destination of the personalized container package can be indicated by an identifier, e.g. name or address. The identifier can be written on the package, e.g. a written name or address in human and/or machine readable format such as a letters, ciphers, bar code, et cetera. Alternatively or additionally, the identifier may comprise electronic identification means, such as an RFID chip, arranged for providing the identifier of the package e.g. wirelessly or through contact.

One example of a personalized container package is a mail piece. The term "mail piece" as used herein encompasses any type of container that can be sent through regular mail services, e.g. envelopes, parcels, and packages. The mail piece is personalized by an indication of an intended destination and/or recipient, e.g. a written address and/or other identifier such as an RFID chip to indicate said destination and/or recipient of the mail piece. The mail piece is typically used to carry a contents, e.g. letter or other cargo, and can be opened to store and/or retrieve said contents within an enclosure of the mail piece.

Registered mail provides an advantage over regular mail in that a sender gets confirmation that a mail piece has safely reached the intended recipient. A further advantage of registered mail can be that the mail piece can be tracked and/or traced while en route.

Traditionally, registered mail involves for the sender to hand in the mail piece to a trusted delivery service. The delivery service registers the mail piece and delivers the mail piece to an intended address of an intended recipient. When successful, the delivery service provides the sender with confirmation that the mail piece was delivered to the intended address. Usually, the intended recipient provides a signature to confirm his identity. Such confirmation may be important, e.g. for legal purposes. A disadvantage of traditional registered mail is that it is labour-intensive and thus costly and time consuming.

WO 2006/052475 A2 describes a mass mail marketing system and method for detecting whether a piece of direct mail marketing has been read by a recipient. There is described an envelope with an embedded sensor to detect whether it has been opened and a transmitter to send information from the sensor to a receiver, which in turn sends the information to a central computer. The envelope may optionally include a receiver, a power source and/or some logic. Unfortunately, merely automating a receiver response does not provide a sufficient level of security for use as registered mail, e.g. with respect to confidentiality.

There is yet a desire for a mail piece suitable for replacing traditional registered mail at reduced labour-intensity.

Another example of a personalized container package is a medicine wrapper, i.e. a sealable package and/or strip used to carry medicine e.g. within an enclosure of the medicine wrapper. The medicine wrapper is personalized by being designated for an intended owner or recipient of the medicine wrapper, e.g. a specific patient for which the medicine is intended. This can be indicated e.g. by a written name, address and/or other identifier such as an RFID chip to indicate said an owner or recipient of the medicine wrapper.

The controlled distribution of medicines can be labour intensive, e.g. checking that medicine reach an intended recipient and checking that a correct dose at the correct time is taken.

There is thus a further desire for a medicine wrapper providing a more controlled means of medicine distribution at reduced labour-intensity.

### SUMMARY

In a first aspect there is provided a mail piece integrally comprising a transmitter arranged for wireless broadcasting of a status signal; a battery arranged for powering the transmitter; a status sensor arranged for sensing a change in status of the mail piece; and a processor arranged for receiving input from the status sensor and modifying the status signal by including status information indicating the change in status; wherein the mail piece further comprises a clock operatively linked to the processor for providing a progressing clock time; and a memory operatively linked to the processor for storing and retrieving a broadcast time calculated according to a broadcast time interval; wherein the processor is arranged for controlling the transmitter for repeatedly broadcasting the status signal each instance that the clock time coincides with the broadcast time.

It is recognized that labour-intensity of registered mail delivery can be reduced by automating the checking and reporting of status updates of the mail piece. By repeatedly broadcasting the status signal according to a known broadcast time interval, a broadcast receiver can be enabled to predict when a next broadcast is expected and provide notification when the expected broadcast is not received. It will be appreciated that the absence of a status signal broadcast can, in itself, be an indication of an important status update, namely that the mail piece may be lost or unaccounted for. This information can prompt a sender or person responsible for the mail delivery to take appropriate action in line with an assumption that contents of the mail piece are no longer confidential. The repeatedly broadcast signal can also be used to track a location of the mail piece, e.g. via triangulation. When the status signal is shielded, a last known location can be found to help locate the missing mail piece. In this way an additional level of security is provided making the present mail piece more suitable for replacing traditional registered mail at reduced labour-intensity. A further advantage can be that the mail piece can be tracked and/or traced while en route.

In an advantageous embodiment, the mail piece comprises an enclosure arranged for carrying contents of the mail piece; wherein the status sensor comprises an opening sensor arranged for detecting a breach of the enclosure; and the processor is arranged for receiving input from the opening sensor and operating the transmitter for modifying the status signal by including opening status information indicative of whether the breach was detected. The opening sensor detects when a recipient has opened the mail piece and the transmitter relays this information. By periodically broadcasting the status signal, it can be prevented that a recipient may tamper with the transmitter and remain unnoticed while opening the mail piece. It is noted that the prior art mass mailing system of WO 2006/052475 A2 is not geared to providing security against tampering of the transmitter, e.g. there may be no way to distinguish between an unopened mail piece and a tampered transmitter.

In a further advantageous embodiment, the status sensor comprises an identification sensor arranged for receiving a recipient identification from a recipient of the mail piece, the recipient identification suitable for distinguishing an identity of the recipient; and the processor is arranged for receiving input from the identification sensor and operating the transmitter for modifying the status signal by including recipient status information indicative of the received recipient identification. The identification sensor may provide an additional level of security/authentication in that a recipient may identify himself as an intended recipient. This identification could replace e.g. a signature used in traditional registered mail as proof that the intended recipient has received the mail piece. Advantageously, the identification is automatically sent as a status signal without requiring additional efforts of mail delivery personnel, thus reducing labour-intensity.

A combination of embodiments wherein the status sensor comprises both an opening sensor and an identification sensor may provide even further advantage. In particular, the status signal can indicate whether the mail piece was opened or not; and if the mail piece was opened, whether this was done by an authorized recipient providing the proper identification. The repeatedly broadcast status signal can prevent an unauthorized person from remaining unnoticed while opening the mail piece without identification. These combined measures thus provide additional security, e.g. ensuring a confidentiality of the mail contents.

It is noted that U.S. patent application 2008/0147423 A1 describes a method and system for confirming and/or verifying receipt of a mail piece by an intended mail recipient. However, this prior art relies on an RFID enabled phone in the possession of the actual mail recipient, i.e. relies on the recipient to provide a status signal. Similarly, U.S. Patent number 7,156,290 B2 describes a system and method for determining whether a mail piece has been opened including mail pieces that have the ability to indicate a previously opened and never opened state. Also this prior art does not provide the desired security because it relies on the recipient to send back the opening status signal. In contrast, the mail piece according to the first aspect of the present disclosure provides a battery-powered transmitter, making it self-sufficient and not dependent on a possibly unauthorized recipient.

In a second aspect there is provided a system for tracking a mail piece, the system comprising a plurality of broadcast receivers arranged for recording a repeatedly broadcast status signal of the mail piece according to a broadcast time interval; the status signal including status information indicating a change in status of the mail piece; a data collection centre in communication with the broadcast receivers and arranged for handling the received status signal; wherein the data collection centre is arranged for providing a status notification signal indicating the status information; and providing an absence notification signal if the status signal is not received for one or more periods of the broadcast time interval.

The system according to the second aspect forms an interrelated counterpart for the mail piece according to the first aspect. Under normal circumstances, the system can provide a location and notification of a changing status of the mail piece. In addition, when a broadcast status signal is not received at an expected broadcast time, the system can provide a notification signal that the mail piece is unaccounted for. In this way it is possible to detect tampering of the mail piece, e.g. disabling or shielding of the transmitter.

In a third aspect there is provided a method for tracking a mail piece, the method comprising providing a plurality of broadcast receivers recording a repeatedly broadcast status signal of the mail piece according to a broadcast time interval; the status signal including status information indicating a change in status of the mail piece; providing a data collection centre in communication with the broadcast receivers, the data collection centre handling the received status signal; wherein the data collection centre provides a status notification signal indicating the status information; and provides an absence notification signal if the status signal is not received for one or more periods of the broadcast time interval.

The method of the third aspect provides similar advantages as the system according to the second aspect. In particular, it provides a way of not only tracking a status of a mail piece, but also track whether the mail piece is unaccounted for. Also the location of the last transmittance and the time this was transmitted can be accounted for.

In a fourth aspect there is provided a method for manufacturing a tracking device for tracking a package, the method comprising providing a substrate comprising a conductive circuit, the conductive circuit connecting a transmitter arranged for wireless broadcasting of a status signal; a battery arranged for powering the transmitter; a status sensor arranged for sensing a change in status of the package; a processor arranged for receiving input from the status sensor and modifying the status signal by including status information indicating the change in status; a clock operatively linked to the processor for providing a progressing clock time; and a memory operatively linked to the processor for storing and retrieving a broadcast time calculated according to a broadcast time interval; wherein the processor is arranged for controlling the transmitter for repeatedly broadcasting the status signal each instance that the clock time coincides with the broadcast time.

The method according to the fourth aspect can be used for manufacturing a tracking device for use in a mail piece according to the first aspect. In particular, the tracking device thus produced can provide a functionality wherein not only a status of the mail piece can be tracked but also provides a way of detecting tampering with the mail piece.

In fifth aspect there is provided a medicine wrapper integrally comprising a transmitter arranged for wireless broadcasting of a status signal; a battery arranged for powering the transmitter; a status sensor arranged for sensing a change in status of the medicine wrapper; and a processor arranged for receiving input from the status sensor and modifying the status signal by including status information indicating the change in status; wherein the medicine wrapper further comprises a clock operatively linked to the processor for providing a progressing clock time; and a memory operatively linked to the processor for storing and retrieving a broadcast time calculated according to a broadcast time interval; wherein the processor is arranged for controlling the transmitter for repeatedly broadcasting the status signal each instance that the clock time coincides with the broadcast time.

By providing a medicine wrapper that repeatedly broadcasts its status signal, not only status changes such as opening of the medicine wrapper, can be tracked, but also the fact that no status changes have occurred, e.g. that the medicine wrapper remains unopened. This can provide a distinction between a medicine wrapper or package that has not been accessed and a medicine wrapper that is not transmitting a status for some reason, e.g. due to a blocked signal or broken transmitter. Such a medicine package be used to provide a more reliable system for medicine distribution, wherein the system can track whether or not a recipient has taken an intended medication. False alerts, e.g. due to a missing status signal, can be distinguished from more important matters such as the fact that a recipient has not taken the intended medication. For example, when a patient is intended to take his medicine at a scheduled time and no status signal is received at that time, it can be decided to wait longer for receiving the status signal, while if a status signal is received at the scheduled time but indicating that the patient has not taken the intended medication, immediate action can be taken, e.g. the patient can be warned.

A status change of the medicine wrapper can be checked and broadcast. For example, a status change of the medicine wrapper may include an opening status indicating whether the contents (i.e. medicine) of the medicine wrapper were accessed and/or whether this was done by an intended recipient. Such a medicine wrapper can provide a more controlled means of medicine distribution at reduced labour-intensity.

### BRIEF DESCRIPTION OF THE DRAWINGS

These and other features, aspects, and advantages of the apparatus, systems and methods of the present invention may become better understood from the following description, appended claims, and accompanying drawing wherein:
FIG 1 illustrates an embodiment of a mail piece;
FIG 2 illustrates an embodiment of a system for tracking a mail piece;
FIG 3 illustrates scenarios for providing notification signals;
FIG 4A illustrates an embodiment of an identification sensor;
FIG 4B illustrates a detail of a microcapsule;
FIG 5 shows an embodiment of a substrate used in manufacturing a tracking device;
FIG 6 illustrates an embodiment of a method for tracking a mail piece;
FIG 7 illustrates an embodiment of a medicine wrapper.

### DETAILED DESCRIPTION

Unless otherwise defined, all terms (including technical and scientific terms) used herein have the same meaning as commonly understood by one of ordinary skill in the art to which this invention belongs as read in the context of the description and drawings. It may be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It may be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

Preferably, the mail piece, medicine wrapper, or other container package integrally comprises the components that provide the desired functionality. In other words, the components form an integrated package, i.e. of one piece. For example, the transmitter 3, battery 4, status sensor 5,6, processor 7, clock 8, and memory 9, may be comprised on a single substrate optionally integrated with the enclosure 2. This arrangement may enable the mail piece to be self-sufficient, e.g. not relying on other components to broadcast its signal.

The transmitter is arranged for wireless broadcasting the signal e.g. omni-directionally spreading a signal to be picked up by nearby receivers. The transmitter may e.g. comprise an antenna. The transmitter may be geared to function in combination with a corresponding receiver. Advantageously, the transmitter is battery-powered, i.e. self-sufficient in its ability to broadcast the signal and preferably not depending e.g. on a recipient to enable the broadcast. While the transmitter is arranged for wireless broadcasting, the signal may be picked up by receivers that themselves relay the signal via a wired or wireless interface to further receivers.

The status sensor is arranged for sensing a change in status of the mail piece. The change in status may result from an interaction with the mail piece, e.g. opening or providing identification. Also other status changes may be monitored. For example, the status sensor may activate a wireless signal that updates a status of the mail piece. The status sensor may e.g. comprise an RFID reader that reads an RFID chip in proximity to the mail piece. The RFID chip could be embedded in a route of the mail piece, e.g. comprised in a mailbox of the recipient or in a machine handling the mail piece. Also actively sent wireless signals may be received by the status sensor.

The processor may include microprocessors, central processing units (CPUs), digital signal processors (DSPs), ASICs, or any other processor(s) or controller(s) such as digital optical devices, or analog electrical circuits that perform the same functions, and employ electronic techniques and architecture. The processor is typically under software control for example, and has or communicates with a memory that stores software and other data such as preferences, parameters, et cetera. The processor and other components may be comprised in integrated electronics or may comprise dedicated components that may themselves be split into further components.

The invention is described more fully hereinafter with reference to the accompanying drawings, in which embodiments of the invention are shown. This invention may, however, be embodied in many different forms and should not be construed as limited to the embodiments set forth herein The invention can for example be an operating form of the internet of things paradigm. Rather, these embodiments are provided so that this disclosure may be thorough and complete, and will fully convey the scope of the invention to those skilled in the art. The description of the exemplary embodiments is intended to be read in connection with the accompanying drawings, which are to be considered part of the entire written description. In the drawings, the size and relative sizes of systems, components, layers, and regions may be exaggerated for clarity. Embodiments are described with reference to cross-section illustrations that are schematic illustrations of possibly idealized embodiments and intermediate structures of the invention.

In the description, relative terms as well as derivatives thereof should be construed to refer to the orientation as then described or as shown in the drawing under discussion. These relative terms are for convenience of description and do not require that the system be constructed or operated in a particular orientation unless stated otherwise. It will further be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. It will further be understood that when a particular step of a method is referred to as subsequent to another step, it can directly follow said other step or one or more intermediate steps may be carried out before carrying out the particular step. Like numbers refer to like elements throughout.

The detailed description that follows uses reference to a mail piece or medicine wrapper as specific implementations of the personalized container package. This provides a clear explanation of the advantages of the personalized container package for these specific implementations. It will however be understood that the description used for explaining the mail piece and medicine wrapper similarly applies to the more general concept of the personalized container packages. In particular, the terms "mail piece" and "medicine wrapper" can be substituted with the more general term "personalized container package". Furthermore, it will be appreciated that the embodiments described with reference to a mail piece can similarly apply to embodiments of a medicine wrapper and vice versa.

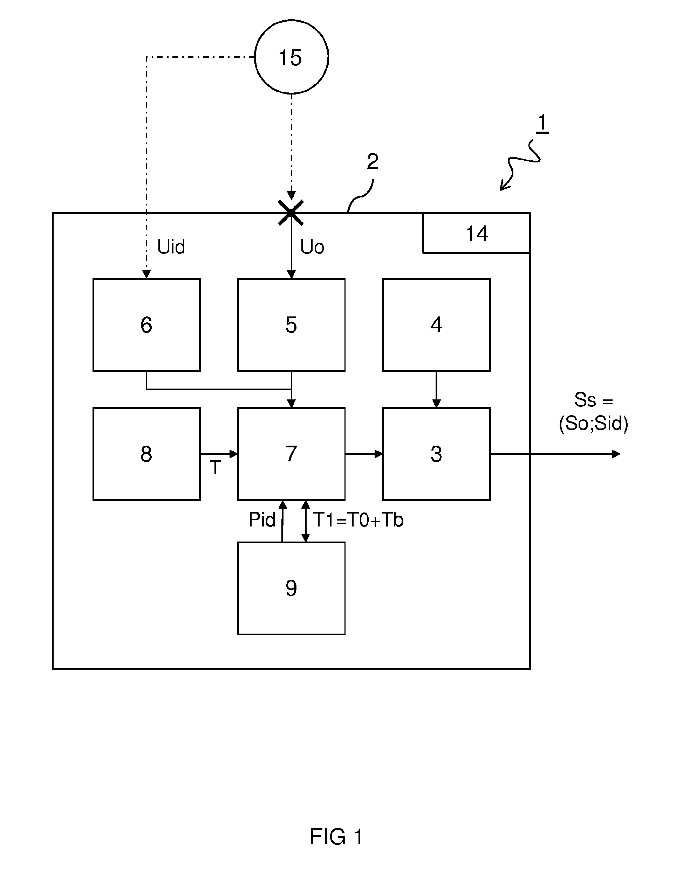

FIG 1 illustrates an embodiment of a mail piece 1, e.g. suitable to be used as registered mail piece and/or for replacing traditional registered mail. The mail piece 1 integrally comprises a transmitter 3, battery 4, status sensor 5,6, processor 7, clock 8, and memory 9. The transmitter 3 is arranged for wireless broadcasting of a status signal Ss. The battery 4 is arranged for powering the transmitter 3. The status sensor 5,6 is arranged for sensing a change in status Uo,Uid of the mail piece 1. The processor 7 is arranged for receiving input from the status sensor 5,6 and modifying the status signal Ss by including status information So,Sid indicating the change in status Uo,Uid. The clock 8 is operatively linked to the processor 7 for providing a progressing clock time T. The memory 9 is operatively linked to the processor 7 for storing and retrieving a broadcast time T0, T1 calculated according to a broadcast time interval Tb. The processor 7 is arranged for controlling the transmitter 3 for repeatedly broadcasting the status signal Ss each instance that the clock time T coincides with the broadcast time T0,T1, e.g. until the broadcasting is stopped or the battery runs out. The battery 4 is adapted for powering the transmitter 3 for repeatedly broadcasting the status signal Ss.

In the shown embodiment, the status sensor comprises an identification sensor 6 arranged for receiving a recipient identification Uid from a recipient 15 of the mail piece 1. The recipient identification Uid is suitable for distinguishing an identity of the recipient 15. For example, the recipient identification Uid may be provided by a code known by the recipient. Alternatively or in addition, the recipient identification Uid may be provided by an interaction with a piece of hardware in possession of the recipient, e.g. an RFID chip. Alternatively or in addition, the recipient identification Uid may be provided by a biometric of the recipient, e.g. a scanned fingerprint. The processor 7 is arranged for receiving input from the identification sensor 6 and operating the transmitter 3 for modifying the status signal Ss by including recipient status information Sid indicative of the received recipient identification Uid. The recipient status information Sid may e.g. indicate that the provided recipient identification Uid conforms to an identification protocol Pid. Alternatively or in addition the recipient status information Sid may indicate the recipient identification Uid by including the recipient identification Uid in the signal, e.g. including a provided identification code.

In an embodiment the identification sensor 6 comprises a touch operated input control integrally comprised in the mail piece 1. This may have an advantage that the recipient does not require a separate device for providing the recipient identification Uid. The touch operated input control may e.g. comprise a key pad on an exterior of the mail piece. Alternatively, the touch operated input control may comprise a biometric sensor for e.g. scanning a fingerprint of the recipient. In an advanced state the identification sensor consists of release capsules that trigger an electrical signal upon breakage. Alternative to a touch operated input control, the identification sensor 6 may comprise e.g. a readout device or antenna arranged for receiving a recipient identification Uid e.g. reading out an RFID identification chip in possession of the recipient or receiving another type of signal identifying the recipient. Also other types of recipient identification Uid are possible.

In the shown embodiment, the memory 9 is further arranged for storing an identification protocol Pid. In this embodiment, the processor 7 modifies the recipient status information Sid depending on whether or not the recipient identification Uid adheres to the identification protocol Pid. For example, the status signal may comprise the indication "correct authorization received". In this or other embodiments, to prevent an unauthorized recipient from emulating a status signal, the broadcast status signal Ss is preferably encrypted. Likewise, the identification protocol Pid and/or the memory 9 may also be encrypted. Alternative to storing an identification protocol Pid in the memory 9, the identification protocol Pid may also be stored on a receiving side, e.g. in a data collection centre, to prevent emulation of the authorization signal. In that case, the recipient status information Sid could be sent unencrypted.

In the shown embodiment, the mail piece 1 comprises an enclosure 2 arranged for carrying contents of the mail piece 1. In the embodiment, the status sensor comprises an opening sensor 5 arranged for detecting a breach Uo of the enclosure 2. The processor 7 is arranged for receiving input from the opening sensor 5 and operating the transmitter 3 for modifying the status signal Ss by including opening status information So indicative of whether the breach Uo was detected.

In an embodiment the opening sensor 5 comprises wiring (not shown) extending throughout the enclosure on all sides of the enclosure. In this way a breach of the enclosure results in a disconnection in the wiring that is detectable by the processor for modifying the opening status information So. Advantageously, it may thus be prevented that the mail piece 1 is opened, e.g. from a bottom side to circumvent the opening sensor. Alternatively or in addition, the opening sensor may comprise further sensor elements.

For example, in an embodiment, the opening sensor 5 comprises a photo detector (not shown) in the enclosure 2. A breach of the enclosure 2 may results in a change of lighting conditions of the photo detector. The change of lighting conditions may be detectable by the processor 7 for modifying the opening status information So. Also other sensor elements may be used alone or in combination with the described elements. In general, it may be desired to provide anti-tampering measures to prevent an unnoticed opening of the mail piece 1.

In an embodiment, the broadcast status signal Ss is encrypted according to an encryption that is sequentially modified between broadcasts. The status signal could e.g. comprise a counter signal that is block-encoded with the other information contents according to an encryption cipher. The counter signal may also be derived from the clock time T. Alternative or in addition, the encryption cipher may itself change between broadcasts. Also other encryption sequences may be used. As a consequence of the sequentially modified encryption, the carrier signal of the status signal Ss changes between broadcasts. irrespective of whether the information contents of the status signal Ss remains the same or not. This may provide an advantage that a sequence of broadcast status signal can not be emulated by re-emitting a single recorded status signal Ss. In particular, it prevents, e.g. that a status signal may be emulated by a third person that the mail piece 1 remains unopened.

In an embodiment, the status signal further comprises a mail piece identifier, i.e. a unique code suitable for distinguishing the mail piece 1. The mail piece identifier may comprise e.g. a destination address, a sender identifier, and/or other characteristics that may identify the mail piece. The mail piece identifier may be stored e.g. in memory 9. Using the mail piece identifier can help distinguish between different mail pieces. In an embodiment, the mail piece identifier is block-encoded in an encrypted status signal with the other status information contents. This may provide an advantage that the broadcast status signal Ss can not be emulated by re-emitting a previously recorded sequence of broadcast status signals Ss of another mail piece.

In an embodiment, the status signal Ss is broadcast upon detection of a change in status of the mail piece, e.g. detection of a breach and/or receiving of a recipient identification Rid. This incidental broadcast may be in addition to the periodic broadcasting to provide immediate information that the status has changed.

In an embodiment, the mail piece comprises an activation switch for starting the periodic broadcasting of the status signal. The activation switch may e.g. be activated when closing an envelope or package.

In one embodiment, the broadcast time interval Tb is less than two hours, preferably less than one hour. A period of one hour or less may be short enough to take appropriate action when the mail piece is unaccounted for. It will be appreciated that a longer broadcast time interval Tb may decrease power consumption. On the other hand a shorter broadcast time interval Tb may increase tracking possibilities.

It is noted that the broadcast time interval Tb may vary between broadcasts. For example, the broadcast time interval Tb may vary according to a predictable algorithm. In that case the receiver may have knowledge of the algorithm and still predict the expected broadcast time.

In one embodiment, the battery 4 provides sufficient energy for powering the transmitter 3 for at least three days after activation. This is a sufficient time to deliver the mail piece.

While shown in the present embodiment as a separate device, the clock 8 may also be integrated into other circuitry, e.g. be comprised in the processor 7. For example, the clock functionality may be formed by counting processor pulses. The clock is arranged for providing a progressing clock time T, i.e. indicating a passage of real time. The clock time T may e.g. comprise a register of the processor that counts clock pulses of the processor. The clock time T may be a relative time, e.g. in relation to a previous or upcoming broadcast time. Alternatively or in addition, the clock may provide an absolute time, e.g. a time of day. The clock may also comprise and/or be formed by an analog circuit, e.g. arranged for providing a specific time period, such as an RC-time. The time period of the analog circuit may correspond e.g. to an integer number of the broadcast time interval Tb.

While shown in the present embodiment as a separate device, the memory 9 may also be integrated into other circuitry, e.g. be comprised in the processor 7. For example the memory 9 may be provided on the same die as the processor 7. The memory may e.g. store parameters or program code used for providing a desired functionality. For example, the memory may store a broadcast time.

Also other components such as the status sensors 5,6 may be partially or wholly integrated into other circuitry. On the other hand, some components may also be divided into further separate sub-components. For example, different memories may exist for storing different data, e.g. the identification protocol Pid, broadcast time interval Tb, last broadcast time T0, etcetera may be stored in separate or shared memories. As another example, the identification sensor 6 may additionally comprise an input panel having a plurality of input keys. The opening sensor 5 may comprise additional wiring for detecting a tampering with the enclosure and or other sensors, e.g. photo detectors for detecting exposure of the contents of the mail piece.

While it is only shown that the transmitter 3 is connected to the battery 4, also other components may be connected to the battery 4, e.g. the processor 7, status sensors 5,6, and/or the clock 8. These and other components may also be powered by separate batteries.

It will be appreciated that the broadcast time e.g. T0,T1, can be stored in any number of ways. For example a previous broadcast time T0 can be stored in combination with a broadcast time interval Tb. The next broadcast time can be calculated by adding the broadcast time interval Tb to the previous broadcast time T0. Alternatively or in addition, the next broadcast time T1 can be stored. Alternatively or in addition, an initial broadcast time T0 can be stored and a next broadcast time can be calculated by multiplying a broadcast count times a broadcast time interval Tb and adding the initial broadcast time T0. There could also be a table of a plurality of broadcast times stored in the memory. The broadcast times can also be stored as a countdown timer, e.g. counting down a time period equal to the broadcast time interval Tb from a previous broadcast time.

The processor 7 is arranged for controlling the transmitter 3 for repeatedly broadcasting the status signal Ss each instance that the clock time T coincides with the broadcast time T0, T1. The coinciding of the clock time and the broadcast time may e.g. be determined by checking T1-dt/2< T <T1+dt/2, wherein "dt" is a time interval around the broadcast time T1 during which the signal is broadcast. Of course also other ways of checking a coincidence between the clock time and the broadcast time can be used. The broadcasting of the status signal preferably comprises a short burst signal around the broadcast time. The burst signal may comprise a redundant signal, e.g. providing a repeated signal to increase chances that the signal can be properly received.

In one embodiment, the mail piece may comprise a receiver arranged for receiving an acknowledgement signal that the broadcast status signal was properly received. In an embodiment the receiver may be formed by the same antenna as the transmitter. In one embodiment, the transmitter may repeat broadcasting the status signal Ss until an acknowledgement signal is received.

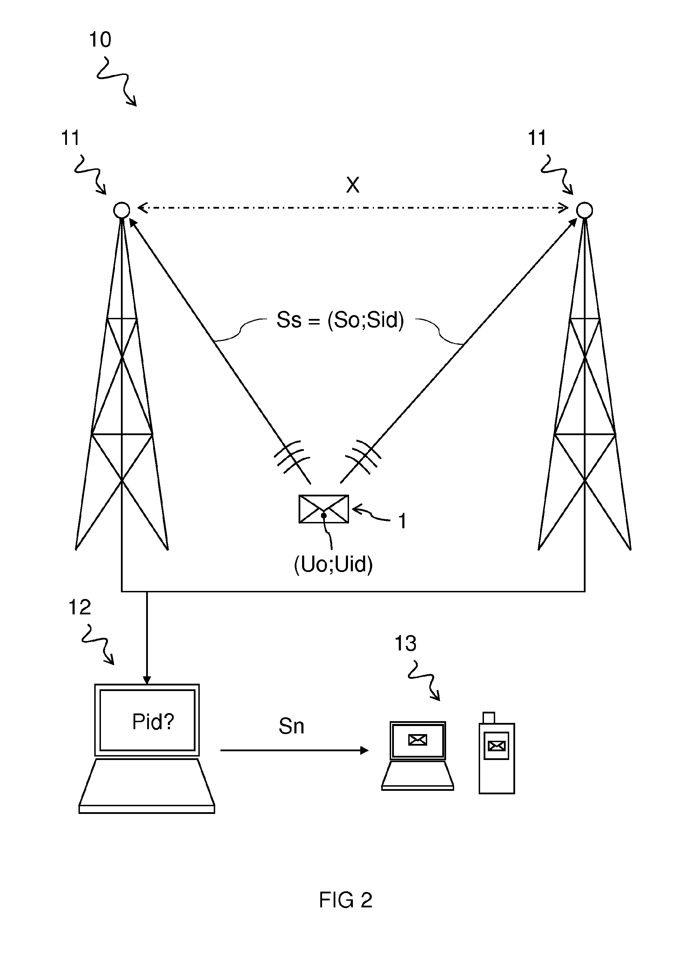

Typically, the mail piece 1 comprises an identifier 14, arranged for indicating a destination and/or ownership of the mail piece, e.g. a human-readable written address of an intended recipient and/or sender on an exterior surface of the mail piece. Alternatively or in addition, the identifier may also be provided by electronic means, e.g. a recipient and/or sender can be stored in a memory of the mail piece. In one embodiment, an identifier of the mail piece is broadcast along with the status information Ss to identify the mail piece in a corresponding system for tracking a mail piece, e.g. as shown in FIG 2. The identifier may alternatively or in addition comprise an identifier key that is correspondingly stored in a memory of the said tracking system. The identifier key can be linked to an address or other identifier of a sender or recipient. By providing a unique identifier on the mail piece, multiple mail pieces can be distinguished and tracked simultaneously.

FIG 2 illustrates an embodiment of a system 10 for tracking a mail piece 1 for registered mail. The system comprises a plurality of broadcast receivers 11 and a data collection centre 12. The broadcast receivers 11 are arranged for recording a repeatedly broadcast status signal Ss of the mail piece 1 according to a broadcast time interval. The status signal Ss including status information So,Sid indicating a change in status Uo,Uid of the mail piece 1. The data collection centre 12 is in communication with the broadcast receivers 11 and arranged for handling the received status signal Ss. The data collection centre 12 is arranged for providing a status notification signal Sn indicating the status information So,Sid. The data collection centre 12 is further arranged for providing an absence notification signal if the status signal Ss is not received for one or more periods of the broadcast time interval.

In an embodiment, the status information Ss comprises opening status information So indicative of whether a breach Uo of an enclosure of the mail piece 1 was detected. In the embodiment, the status information Ss further comprises recipient status information Sid. The recipient status information Sid is indicative of a recipient identification Uid suitable for distinguishing an identity of a recipient. The data collection centre 12 is arranged for providing the notification signal Sn to a sender 13 of the mail piece 1 when the opening status information So provides an indication that the mail piece 1 has been opened. The notification signal Sn comprises an indication whether the recipient status information Sid is compliant with an identification protocol Pid for confirming an identity Uid of an intended recipient. In the shown embodiment, the identification protocol Pid is checked at a location of the data collection centre 12. Alternatively, the identification protocol Pid could be checked by the mail piece 1 itself.

In one embodiment, the data collection centre 12 is arranged for providing the notification signal Sn when a status signal Ss of the mail piece 1 has not been received for more than a predetermined period of time and opening status information So of a previously received status signal Ss of the mail piece 1 indicates that the mail piece 1 has not been opened. In a further embodiment tracking the mail piece 1 and/or provision of the notification signal Sn is discontinued after it is detected that the mail piece 1 was opened. It will be appreciated that after the mail piece is opened, the contents of the mail piece may be separated from the enclosure.

In an embodiment, the data collection centre 12 is further arranged for determining a last known location of the mail piece 1. The location may be deduced from a location of the broadcast receivers 11 that last received the status signal Ss. In an embodiment, the last known location is included in the notification signal Sn. In this way a sender 13 or person responsible for the mail delivery may track a location of the mail piece 1. This may be advantageous for locating a mail piece when the status signal is no longer received.

When the locating function is combined with the opening sensor this may be advantageous for locating a recipient taking knowledge of the mail piece. In one embodiment, the system comprises memory for storing an intended address of the mail piece and a processor for comparing a location where the mail piece was opened with a location of the intended address. When these locations coincide, a notification signal may be provided that the mail piece was opened at the intended address. When they do not coincide, a notification signal may be provided that the mail piece was not opened at the intended address, and optionally the address where the mail piece was opened can be provided. When the locating function is further combined with the identification sensor, this may be advantageous for locating an unauthorized recipient.

In one embodiment, the broadcast receivers 11 are comprised in a mobile telecommunications system receiver antenna adapted for receiving the status signal Ss and forwarding the status signal Ss to the data collection centre 12. Alternatively or in addition, the broadcast receivers 11 may comprise local receiving and sending means, e.g. a local gateway that forward and/or amplify the status signal to further broadcast receivers.

In an embodiment, the broadcast receivers 11 are distributed according to a communication range X of the mail piece 1 over an area where the mail piece 1 is to be handled and delivered to an intended recipient of the mail piece 1. This has an advantage that the mail piece 1 can continuously communicate with the broadcast receivers 11. In an embodiment, the transmitter 3 comprises an antenna arranged for broadcasting the status signal Ss for being registered by a broadcast receiver 11 at a range of at least 300 meters or longer. This range may be sufficient to provide coverage be a grid of broadcast receivers 11 of existing telecommunications networks.

In an embodiment, the system 10 comprises a plurality of mail pieces as described above in relation to FIG 1. In the embodiment, each mail piece is arranged for providing a status signal Ss that includes a mail piece identifier.

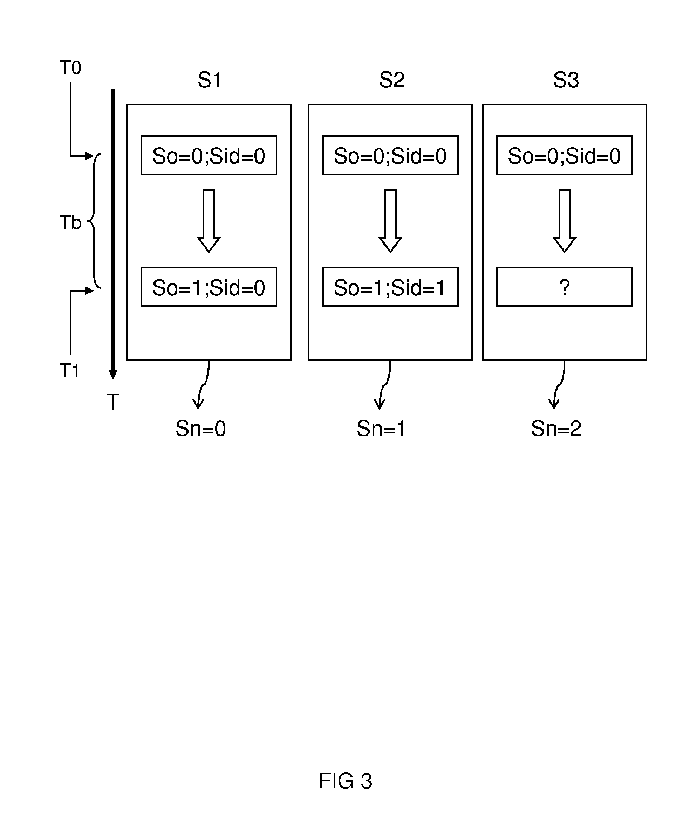

FIG 3 illustrates different scenarios S1, S2, S3, for providing notification signals Sn depending on a received sequence of status signals with opening status information So and recipient status information Sid. In each scenario, a first broadcast status signal at clock time T=T0 is followed by a second broadcast status signal at clock time T=T1. The broadcasts are separated in time by a broadcast time interval Tb.

The opening status information So=0 indicates that the mail piece has not been opened. The opening status information So=1 indicates that the mail piece has been opened. The recipient status information Sid=0 indicates that no recipient identification was received or that a wrong recipient identification was received. In scenario S1, a status notification signal Sn=0 can be provided indicating that the mail piece was opened by an non-authorized or unidentified recipient.

Conversely, in scenario S2, the recipient status information Sid=1 at T=T1 indicates that a correct recipient identification was received. In this scenario, another status notification signal Sn=1 can be provided indicating that the mail piece was opened by an authorized or intended recipient.

Finally, the question mark "?" in scenario S3 indicates that no status signal was recorded at the expected second broadcast time T=T1. In this scenario, an absence notification signal Sn=2 can be provided indicating that the mail piece is lost or unaccounted for. The absence notification signal can also be given after a number of broadcast time interval Tb have passed without registering the status signal. The coordinates of the last transmittance will be sent to the sender.

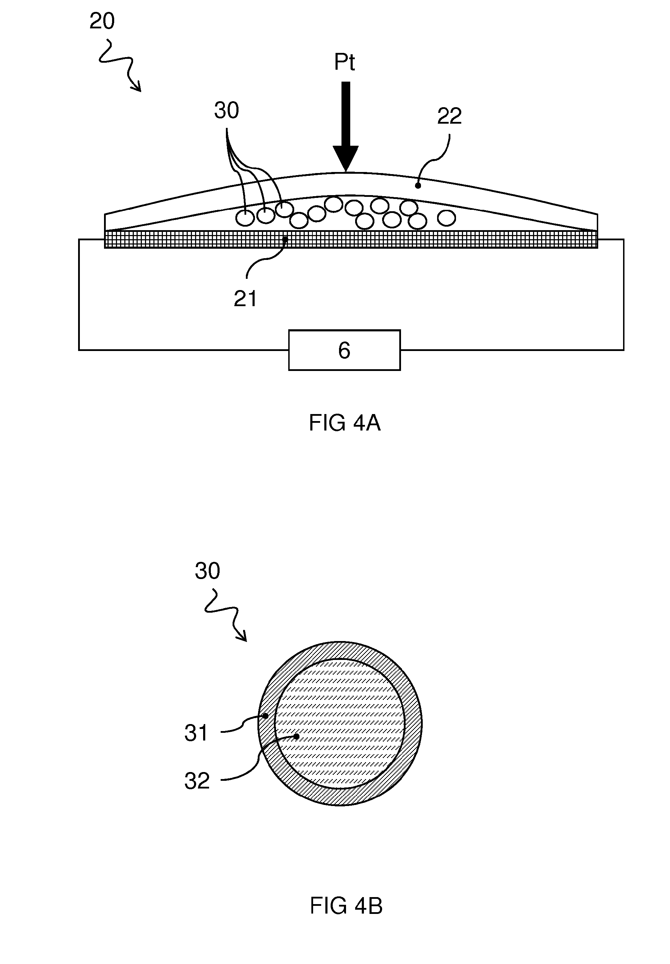

FIG 4A illustrates a touch key 20 as part of an embodiment of touch operated input control. FIG 4B illustrates a detail of a microcapsule 30 for use in the touch key 20.

In an embodiment, the identification sensor 6 comprises a touch operated input control integrally comprised in the mail piece. The identification sensor 6 comprises a touch key 20 on an exterior of the mail piece. As shown in FIG 4A, the touch key 20 comprises a plurality of microcapsules 30. As shown in FIG 4B, the microcapsules 30 comprise capsule walls 31 enclosing one or more reactants 32. The capsule walls 31 are breakable when subjected to a touch pressure Pt, e.g. applied to the top cover 22 of the touch key 20. The reactant 32 flows from the capsules upon breakage of the capsule wall. The reactant causes a detectable colour change of the touch key upon release from the capsules for providing visual feedback to a user that the touch key 20 was pressed. In one example, the capsule wall 31 may comprise an inert material, e.g. wax, polymer, crosslinked polymer network, crystalline compound, or mixtures thereof. The reactant may comprise an acid or base that reacts with pH sensitive paper comprising a halochromic material in the top cover 22 of the touch key. When the reactant is released from the capsules, as a result of mechanical stress exerted by the touch event, the acid or base may colour the pH sensitive paper. Also other variations are possible, e.g. a reactant comprising glucose combined with a glucose sensitive paper. In another embodiment, the capsules may comprise two different chemicals that, when combined, undergo a colour change, e.g. a solution of phenolphthalein and a basic solution.

In a further embodiment, the reactant 32 causes a change of resistance in a circuit 21 of the identification sensor 6. The change of resistance is detectable by the processor for registering when the touch key is pressed. The change of resistance may be effected by the same or other chemical causing the colour change of the touch key. For example, the circuit 21 may comprise polyaniline layer that changes conductivity when subjected to acid. In another example, the reactant may comprise graphite or other conductive material or release of electrolyte liquid, to establish an electrical path in the circuit. Alternative or in addition to a change in resistance, also other electrically detectable changes may be effected by the reactant, e.g. a redox reaction causing an electrical current in the circuit 21.

In an embodiment, the microcapsules may have a typical diameter between 10-100 µm or even smaller. It is noted that smaller capsules may provide a convenient manner of application. In one embodiment, the capsules are applied to the mail piece using printing technology, e.g. inkjet printing for capsules <10 µm diameter or screen printing for capsules around 50 - 250 µm in diameter.

In one embodiment, the microcapsules may be manufactured using emulsion-based technologies, including (complex) coacervation and interfacial polymerization, or inkjet-based technologies, including concentric nozzle encapsulation and encapsulation printing. In one embodiment, a multi component particle generating system is used such as disclosed in EP2020261 A1.

It will be appreciated that the touch key 20 can provide specific advantages in combination with an identification sensor, e.g. for use in a mail piece. In general, the touch key 20 may also have further applications, e.g. in printed circuitry. In general the microcapsules can be used for applications for wherein a visual feedback and/or electrical signal are desired when a threshold pressure is exerted to an area comprising the micro capsules. Advantages of the microcapsules may include manufacturability and/or suitability to be used in a context of paper applications. While the present embodiment shows the micro capsules enclosed in a pocket, the microcapsules may also be printed on an exterior surface of a touch sensitive surface.

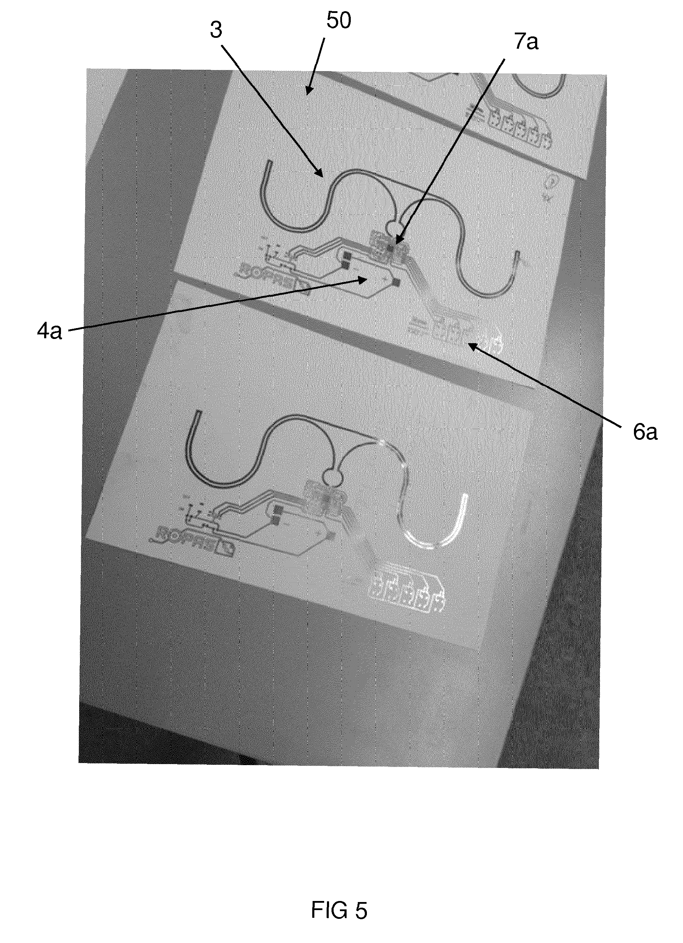

FIG 5 shows an embodiment of a substrate 50, which in this case is paper, used in a method for manufacturing a tracking device for tracking a package. As shown, the substrate 50 comprises a conductive circuit, which is applied by printing techniques. In the present embodiment, the conductive circuit forms a transmitter 3 arranged for wireless broadcasting of a status signal Ss. As shown the circuit comprises a battery position 4a, arranged for connecting a battery 4 arranged for powering the transmitter 3. The circuit comprises a sensor position 6a arranged for connecting a status sensor arranged for sensing a change in status of the package, e.g. a touch input. The circuit comprises a processor position 7a arranged for connecting a processor 7 arranged for receiving input from the status sensor and modifying the status signal by including status information indicating the change in status. The processor may comprise a clock for providing a progressing clock time. The processor may further comprise a memory for storing and retrieving a broadcast time calculated according to a broadcast time interval. The said processor is arranged for controlling the transmitter 3 for repeatedly broadcasting the status signal each instance that the clock time coincides with the broadcast time. A further step of the manufacturing method may comprise providing an enclosure, e.g. of a mail piece, and integrating the substrate 50 with the enclosure.

In one embodiment, there is provided a mail piece comprising a substrate 50 comprising a printed conductive circuit; wherein electronic components of the mail piece such as the battery, transmitter, processor, etc., are arranged on the substrate interconnected by the conductive circuit; wherein the battery 4 comprises a planar printed battery and wherein the transmitter 3 comprises a printed antenna. The embodiment provides a good manufacturability for large scale production, e.g. roll-to-roll manufacturing. Also, the form-factor of the substrate makes it suitable to be used in a conventional mail piece or other small container, e.g. medicine package, taking up minimal space and adding only minimal weight. In one embodiment, the substrate and components are of disposable eco-friendly material, i.e. can be disposed of without causing harm to the environment. By providing a disposable mail piece, a recipient will not have to bother with special measures for discarding the mail piece.

It will be appreciated that, while the tracking device may have particular advantages for mail related services, e.g. in combination with appropriate sensors and logic, there may also be other advantageous applications. In general the present disclosure relates to a tracking device integrally comprising a transmitter arranged for wireless broadcasting of a status signal; a battery arranged for powering the transmitter; a status sensor arranged for sensing a change in status of a package or device to be attached to the tracking device; and a processor arranged for receiving input from the status sensor and modifying the status signal by including status information indicating the change in status; wherein the mail piece further comprises a clock operatively linked to the processor for providing a progressing clock time; and a memory operatively linked to the processor for storing and retrieving a broadcast time calculated according to a broadcast time interval; wherein the processor is arranged for controlling the transmitter for repeatedly broadcasting the status signal each instance that the clock time coincides with the broadcast time. The embodiments described in relation to the mail piece may equally relate to a more general package or device to be attached to the tracking device, e.g.

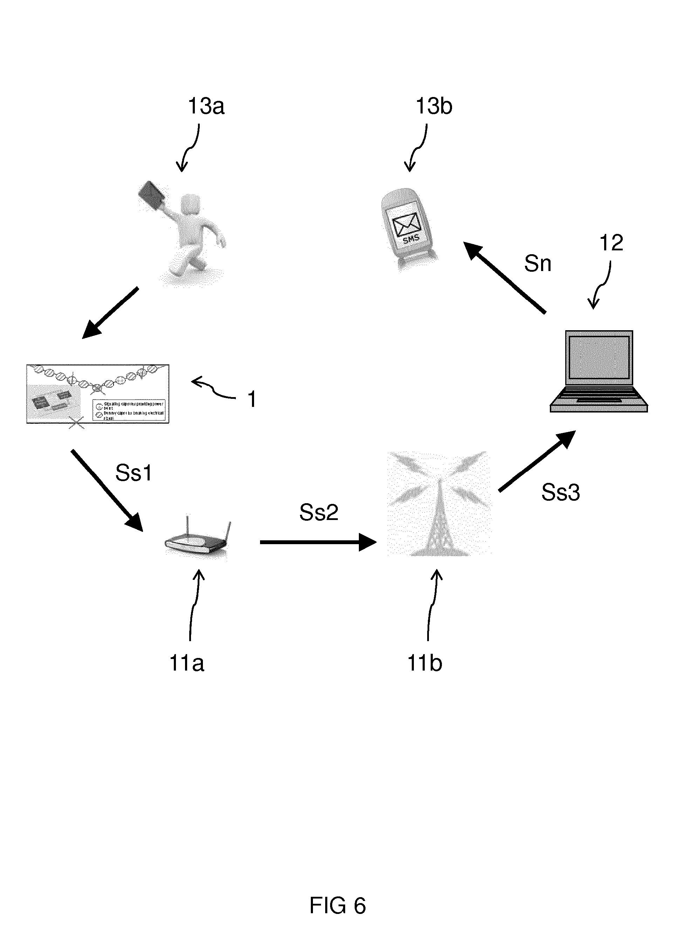

FIG 6 illustrates a scenario wherein an embodiment of the systems and methods according to the present disclosure may be used.

For example, one or more of the following steps in the sending process may be used.
- The sender 13a can register and activate the mail piece 1, e.g. an envelope. The sender e-mail address or mobile number can be provided to a data collection point. After that the battery is turned on by a switch or by e.g. closing the electrical circuit by closing the envelope. At this point the envelope starts transmitting periodic pulses with encrypted codes of status information of the envelope (not opened, correctly opened, and incorrectly opened) for a defined period such as 3 days. The battery provides sufficient power for this period.
- The pulses can be transmitted using frequencies on readily available networks such as UWB (for ultra low power consumption), or ZigBee for low power consumption.
- Gateways 11a arranged near UMTS signalling points 11b are used to translate the encrypted pulses Ss1 into data Ss2 that are transferred to the UMTS network. Transmitting this data might require additional power, which is available at the gateways.

- The UMTS signalling points transfer the data Ss3 to a data collection centre 12. At this point the status of the envelope and the signal locations pick up point are monitored. The data assembly point can e.g. be a server managed and owned by a mail delivery company.
- Eventually the sender or other designated party 13b can monitor the envelope status or can receive a notification signal Sn e.g. in the form of an e-mail or SMS referring to the status of the envelope.

For example, in one embodiment, a mail piece originates from a sender 13a and a data collection centre 13 comprises a memory arranged for storing contact details 13b of the sender 13a, e.g. phone number, email address et cetera. The data collection centre 12 is arranged for providing a status notification signal Sn to the sender 13a according to the stored contact details 13b if a status signal Ss of the mail piece indicates that a status change has occurred to the mail piece, e.g. that the mail piece has been opened or an identification code has been provided or a location of the mail piece has changed. The status notification signal Sn may also comprise a combination of information, e.g. where the mail piece was opened and/or by whom (according to an identification protocol).

It will be appreciated that while example embodiments of a mail piece and system for tracking a mail piece are described, also alternative systems and means may be used for achieving similar results. E.g. electrical components may be split into separate and/or dedicated components or be comprised in integrated circuitry. Receivers and transmitters may be combined or further distributed. While some of the communication paths were shown to be wireless, other paths may comprise a wired interfaces, e.g. connecting the broadcast receivers to the data collection centre. The various elements of the embodiments as discussed and shown offer certain advantages, such as tracking a mail piece status while providing security against tampering. Of course, it is to be appreciated that any one of the above embodiments or processes may be combined with one or more other embodiments or processes to provide even further improvements in finding and matching designs and advantages. For example, the microcapsules may also be used as part of an anti-tampering mechanism wherein, when the mail piece is opened, the reactant is released to stain the mail piece and/or activate e.g. the opening sensor.

In some embodiments, the present disclosure relates to an envelope or other package with the ability to determine wireless its location and opening status. E.g. password control can be used to determine whether the envelope is opened by the correct receiver. The envelope may be used as a standalone device e.g. as an alternative for traditional registered post.

In one embodiment, the envelope may comprise on one ore more of the following building blocks:
1) a planar printed battery function
2) a sensor switch domain
3) signalling system design (including interpreting chip and antenna for transmitting a wireless signal)
4) fibre based surface with optimised properties using high end printing techniques
5) printed electronic tracks

In one embodiment, the envelope is equipped with electronic switches of which some act as keyboard (for password protection) and some are dedicated as activation button - that may be pressed before the envelope is sent. After activation the envelope may starts transmitting a signal to a base station using its radio interface. The transmission may be realized e.g. every 1 hour. The transmitted signal conveys information on envelope status ("opened or not", "password code typed or not"). The envelope may comprise printed anti-tampering wires in the envelope paper. Tearing of the envelope paper can thus be detected by the electronic system as "opening".

In one embodiment, the envelope comprises:
1) Printed Battery and antenna; these elements may be used to be able to track location of the letter/package and signalling the opening protocol-secured opening of the letter/package.
2) Pressure switches; these switches may be conductive change and e.g. only the right order will generate the correct signal. The sensor switches may contain electrolytes or are dummy capsules to discriminate between correctly and incorrectly opened envelope to be able to recognise tampering and generate an opening protocol for the packages.
3) Signalling; monitoring system on chip. A chip may be integrated on the paper envelope. Integration may be done by flip chip techniques or by other available connection techniques. This system preferably detects the opening of the letter/package and by whom (checking the opening protocol) and aim to transmit the opening data to the sender. The package/letter can be located by monitoring the location of a periodic released short signal (pulse). Opening of the package by the right addressee may be facilitated by the use of a personalised opening protocol, which in one embodiment is to be used prior to opening the envelope. A plain or encrypted signal can be transmitted using low power communication technologies networks such as UWB, Wi-Fi, Wibree, ZigBee. Regarding operation frequency, there is a choice between use of free non-licensed spectrum or to use dedicated licensed spectrum for this purpose. Ultra wideband (UWB) may be suitable due to low power consumption on the transmitter side (i.e. the envelope). When individual envelope uses UWB to transmit with very low data rates it is possible to use spread-spectrum techniques (specifically Direct Sequence Spread Spectrum (DSSS)) to contribute to a robustness of communication. For low required data rate longer spreading sequence can be used which may mean additional processing gain for transmitted signal - and thus lower sending power. A solution with low data rates and long spreading sequences is preferred. For UWB communication additional gateways may be used. ZigBee may be another possibility. This network uses low power (< 10 mW transmission power) and can cover large distances in open space (200m) but may be more sensitive for foliage and obstacles.
4) All components are integrated in a conductive circuit on paper. When the envelope/package is opened by a non-addressee not following the pre-conditioned route, a signal (including location data) may be transmitted for notification.

In one embodiment, the opening protocol, also referred to as identification protocol, is composed of different pressure switches, which are activated in a specific order to create a correct circuit for signalling. A plain chip signals an encrypted code e.g. to an (UMTS) network that the correct or incorrect code has been applied. A right code signal may indicate that the envelope is delivered to the right person. In a second aspect it is possible to identify the location where the signal is picked up to see if the envelope is opened on the right location. A wrong code signal may imply that the content of the envelope is public. The sender may take action such as: "disable credit card code", "report product as stolen". For "law enforcement" the transmittance point were the signal is last picked up may be sent to the sender. A shielded signal can mean that the code is blocked or no transmittance can be sent from the chip. The sender can ask the receiving party for product validation (e.g. ask for the password, or ask to bring the envelope within range of an access point, or open space). If the receiving party cannot comply with the demands the sender can interpret that the parcel is opened with the wrong code. In this case the last transmittance point can be sent to the sender.

In one embodiment, the location of the envelope can be defined as the UMTS signalling point where the transmittance is picked up. The physical location of the envelope may be e.g. within 300 meter of this point. UMTS locating may be preferred over GPS locating due to limited battery power and computing capacity. In urban areas enough coverage of UMTS signalling points may be available.

It is appreciated that the present disclosure offers particular advantages to tracking a mail piece e.g. for registered mail, and in general can be applied for any application wherein a status of a container package, personalized or otherwise, is tracked. For example, the disclosure may also provide advantages for tracking an opening status of other types of container packages, e.g. medicine packages, briefcases, boxes, etc. The present disclosure offers particular advantage to personalized container packages wherein a status of the package is tracked in relation to a specific person, e.g. recipient and/or owner of the container package. For such packages, handling of status changes can e.g. depend on the specific recipient or owner. By being able to track status changes in a container packages linked to specific person, these status changes can be handled according to a personalized or custom preference.

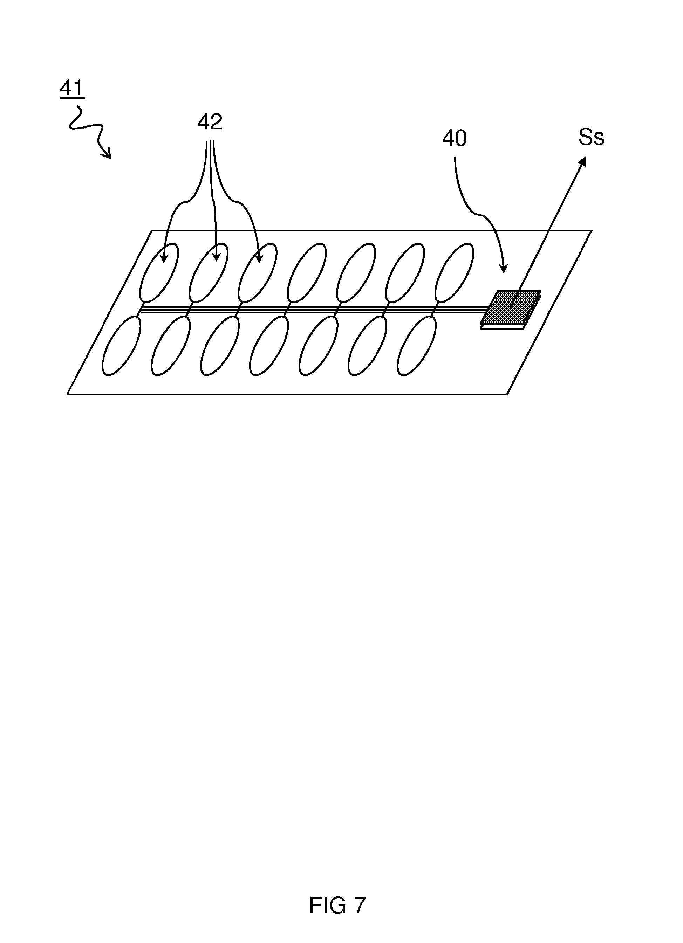

FIG 7 illustrates an embodiment of a medicine wrapper 41. In the embodiment, the medicine wrapper, e.g. strip or container, comprises a plurality of compartmentalized enclosures 42. Medicine is enclosed separately in each enclosure 2. The enclosures are linked to a status sensor, e.g. comprised in a central chip 40. The central chip 40 may further comprise other components, e.g. the transmitter, battery, processor, clock, and memory as described herein. When an enclosure 42 is accessed, e.g. opened, the opening sensor may detect said accessing. For example, a circuit or wire running through a part of the enclosure can be interrupted by opening the enclosure and the status sensor is arranged to detect said interruption. In this way a medicine wrapper is provided that is arranged to track the individual accessing of each medicine, e.g. pill in a wrapper. When a recipient, e.g. patient takes out a medicine from said separate enclosure, a status change is detected and broadcast by status signal Ss. By providing a medicine wrapper having separate enclosures with medicine therein and an opening sensor that can track the individual opening of the enclosures, a medicine wrapper is provided that can be used to track whether a patient has taken an intended medication/dose and/or at a scheduled time. For example, by checking the number of enclosures of the medicine wrapper that are opened, it may be inferred that a patient has taken the medicine that were contained in said enclosures.

In one embodiment, a system for tracking a medicine wrapper comprises one or more broadcast receivers arranged for recording a repeatedly broadcast status signal of the medicine wrapper according to a broadcast time interval; the status signal including status information indicating a change in status of the medicine wrapper; a data collection centre in communication with the broadcast receivers and arranged for handling the received status signal; wherein the data collection centre is arranged for storing a time schedule for indicating a time period when a recipient is intended to take medicine from the medicine wrapper; and providing a notification signal if a status signal is received from the medicine wrapper indicating that an enclosure of the medicine wrapper has not been opened or accessed according to the time schedule, e.g. that a recipient has not taken medicine while he was intended to do so or that the recipient has taken medicine before he was intended to do so or in a smaller or larger dose than intended. The time schedule can be stored e.g. in a memory and linked to an identifier of a specific patient.

In another or further embodiment, the data collection centre is optionally arranged for providing a status notification signal indicating the status information; and providing an absence notification signal if the status signal is not received for one or more periods of the broadcast time interval. The absence notification signal can be used to track whether a medicine wrapper is unaccounted for. In one embodiment, the plurality of broadcast receivers can be distributed locally, e.g. in a hospital or a home for the elderly, to track medicine packages in a confined location. For a locally distributed system, broadcast signals can be relatively weak and a lower demand is placed e.g. on the transmitter/battery of the package. For example, a pre-existing WIFI network can be used or a dedicated alternative network.

While it is demonstrated that an alternative or additional goal can be achieved, it will be appreciated that the medicine wrapper involves similar or corresponding technical features as the mail piece as described herein and that the embodiments described herein with reference to the mail piece can also be used to describe embodiments of the said medicine wrapper. For example, in one embodiment the medicine wrapper comprises an opening sensor and/or identification sensor as described herein. The opening sensor can be used to track accessing of the medicine and the identification sensor can be used to check whether an intended recipient has accessed the medicine.

Finally, also other status variables than opening status or identification status of the mail piece, medicine wrapper, or other container package can be tracked using one or more appropriate sensors, e.g. moisture, temperature, pressure, shock, and/or acceleration experienced by a package and or device to which the sensor is attached. For example, in one embodiment, the medicine wrapper comprises a temperature sensor to continuously or periodically measure a temperature of the medicine package. The temperature data may be used e.g. to estimate a spoiling and/or expiration date of the medicine. Also other sensors e.g. moisture sensors can be used to estimate said expiration date. In one embodiment, when a status sensor and/or processor of the medicine package determines, e.g. based on temperature and/or clock status, that the medicine is no longer fit for consumption, it will provide an indication of this status change, e.g. by broadcasting.

The status sensor may be partly integrated into a device. Also internal status of a device can be tracked. In one example, a computer readable medium such as a USB stick or hard drive may comprise an access sensor arranged for providing a signal when the medium is accessed, e.g. read and/or written. This may also be combined e.g. with a system arranged for tracking a location of the device/package. Such alternative packages and devices may benefit from a similar infrastructure as the system used for tracking the mail piece.

In general, the present disclosure provides a personalized container package integrally comprising a transmitter arranged for wireless broadcasting of a status signal; a battery arranged for powering the transmitter; a status sensor arranged for sensing a change in status of the container package; and a processor arranged for receiving input from the status sensor and modifying the status signal by including status information indicating the change in status; wherein the container package further comprises a clock operatively linked to the processor for providing a progressing clock time; and a memory operatively linked to the processor for storing and retrieving a broadcast time calculated according to a broadcast time interval; wherein the processor is arranged for controlling the transmitter for repeatedly broadcasting the status signal each instance that the clock time coincides with the broadcast time. Furthermore there is provided a system for tracking a container package, the system comprising a plurality of broadcast receivers arranged for recording a repeatedly broadcast status signal of the container package according to a broadcast time interval; the status signal including status information indicating a change in status of the container package; a data collection centre in communication with the broadcast receivers and arranged for handling the received status signal; wherein the data collection centre is arranged for providing a status notification signal indicating the status information; and providing an absence notification signal if the status signal is not received for one or more periods of the broadcast time interval.

It is thus recognized that the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

## Claims

1. Personalized container package (1) integrally comprising
- an identifier (14) arranged for indicating a destination and/or ownership of the container package (1);
- an enclosure (2) arranged for carrying contents of the container package (1)
- a transmitter (3) arranged for wireless broadcasting of a status signal (Ss);
- a battery (4) arranged for powering the transmitter (3);
- a status sensor (5,6) arranged for sensing a change in status (Uo,Uid) of the container package (1); and
- a processor (7) arranged for receiving input from the status sensor (5,6) and modifying the status signal (Ss) by including status information (So,Sid) indicating the change in status (Uo,Uid); wherein the container package further comprises
- a clock (8) operatively linked to the processor (7) for providing a progressing clock time (T); and
- a memory (9) operatively linked to the processor (7) for storing and retrieving a broadcast time (T0, T1) calculated according to a broadcast time interval (Tb); wherein
the processor (7) is arranged for controlling the transmitter (3) for repeatedly broadcasting the status signal (Ss) each instance that the clock time (T) coincides with the broadcast time (T0,T1).

2. Container package according to claim 1, wherein
- the status sensor comprises an identification sensor (6) arranged for receiving a recipient identification (Uid) from a recipient (15) of the container package (1), the recipient identification (Uid) suitable for distinguishing an identity of the recipient (15); and
- the processor (7) is arranged for receiving input from the identification sensor (6) and operating the transmitter (3) for modifying the status signal (Ss) by including recipient status information (Sid) indicative of the received recipient identification (Uid).

3. Container package according to claim 2, wherein the identification sensor (6) comprises a touch operated input control integrally comprised in the container package (1).

4. Container package according to claim 3, wherein the identification sensor (6) comprises a touch key (20) on an exterior of the container package (1); the touch key (20) comprising a plurality of microcapsules (30); the microcapsules (30) comprising capsule walls (31) enclosing one or more reactants (32); wherein the capsule walls (31) are breakable when subjected to a touch pressure (Pt); wherein the reactant (32) flows from the capsules upon breakage; wherein the reactant upon release from the capsules causes a colour change of the touch key for providing visual feedback to a user that the touch key (20) was pressed.

5. Container package according to claim 4, wherein the reactant causes a change of resistance in a circuit (21) of the identification sensor (6), wherein said change of resistance is detectable by the processor (7) for registering when the touch key is pressed.

6. Container package according to the claims 2 - 5, wherein the memory (9) is further arranged for storing an identification protocol (Pid); wherein the processor (7) modifies the recipient status information (Sid) depending on whether or not the recipient identification (Uid) adheres to the identification protocol (Pid); wherein the broadcast status signal (Ss) is encrypted.

7. Container package according to any of the previous claims, wherein
- the status sensor comprises an opening sensor (5) arranged for detecting a breach (Uo) of the enclosure (2); and
- the processor (7) is arranged for receiving input from the opening sensor (5) and operating the transmitter (3) for modifying the status signal (Ss) by including opening status information (So) indicative of whether the breach (Uo) was detected.

8. Container package according to any of the previous claims, the container package comprising a substrate (50) comprising a printed conductive circuit; wherein electronic components of the container package are arranged on the substrate interconnected by the conductive circuit; wherein the battery (4) comprises a planar printed battery and wherein the transmitter (3) comprises a printed antenna.

9. System (10) for tracking the container package (1) according to any of the previous claims, the system comprising
- a plurality of broadcast receivers (11) arranged for recording a repeatedly broadcast status signal (Ss) of the container package (1) according to a broadcast time interval (Tb); the status signal (Ss) including status information (So,Sid) indicating a change in status (Uo,Uid) of the container package (1);
- a data collection centre (12) in communication with the broadcast receivers (11) and arranged for handling the received status signal (Ss); wherein the data collection centre (12) is arranged for
○ providing a status notification signal (Sn=0,1) indicating the status information (So,Sid); and
○ providing an absence notification signal (Sn=2) if the status signal (Ss) is not received for one or more periods of the broadcast time interval (Tb).

10. System according to claim 9, wherein the status information (So,Sid) comprises
○ opening status information (So) indicative of whether a breach (Uo) of an enclosure (2) of the container package (1) was detected; and
○ recipient status information (Sid) indicative of a recipient identification (Uid) suitable for distinguishing an identity of a recipient (15); wherein
- the data collection centre (12) is arranged for
○ providing the notification signal (Sn) to a sender (13) of the container package (1) when the opening status information (So) provides an indication that the container package (1) has been opened, wherein the notification signal (Sn) comprises an indication whether the recipient status information (Sid) is compliant with an identification protocol (Pid) for confirming an identity (Uid) of an intended recipient.

11. System according to claim 9 or 10, wherein the data collection centre (12) is further arranged for
○ determining a last known location of the container package (1) from a location of the broadcast receivers (11) that last received the status signal (Ss); and including the last known location in the notification signal (Sn).

12. System according to any of the claims 9 - 11, wherein the container package comprises a mail piece originating from a sender (13a), wherein the data collection centre (12) comprises
- a memory arranged for storing contact details (13b) of the sender (13a); wherein the data collection centre (12) is arranged for
- providing a status notification signal (Sn) to the sender (13a) according to the stored contact details (13b) if a status signal (Ss) is received from the mail piece (1) indicating that the mail piece has been opened (So=1).

13. System according to any of the claims 9 - 11, wherein the container package comprises a medicine wrapper (41) having one or more enclosures (42) wherein the data collection centre (12) comprises
- a memory arranged for storing an identifier of a patient linked to a time schedule of a period for intended medicine intake by the patient; wherein the data collection centre (12) is arranged for
- providing a status notification signal if a status signal (Ss) is received from the medicine wrapper indicating that the one or more enclosures (42) of the medicine wrapper have not been opened according to the time schedule.

14. Method for tracking a container package (1), the method comprising
- providing a plurality of broadcast receivers (11) recording a repeatedly broadcast status signal (Ss) of the container package (1) according to a broadcast time interval (Tb); the status signal (Ss) including status information (So,Sid) indicating a change in status (Uo,Uid) of the container package (1);
- providing a data collection centre (12) in communication with the broadcast receivers (11), the data collection centre (12) handling the received status signal (Ss); wherein the data collection centre (12)
○ provides a status notification signal (Sn0,Sn1) indicating the status information (So,Sid); and
○ provides an absence notification signal (Sn2) if the status signal (Ss) is not received for one or more periods of the broadcast time interval (Tb).

15. Method for manufacturing a tracking device for tracking a container package according to claim 14, the method for manufacturing comprising providing a substrate comprising a printed conductive circuit, the conductive circuit connecting
- a transmitter (3) arranged for wireless broadcasting of a status signal (Ss);
- a battery (4) arranged for powering the transmitter (3);
- a status sensor (5,6) arranged for sensing a change in status (Uo,Uid) of the package;
- a processor (7) arranged for receiving input from the status sensor (5,6) and modifying the status signal (Ss) by including status information (So,Sid) indicating the change in status (Uo,Uid);
- a clock (8) operatively linked to the processor (7) for providing a progressing clock time (T); and
- a memory (9) operatively linked to the processor (7) for storing and retrieving a broadcast time (T0, T1) calculated according to a broadcast time interval (Tb); wherein
the processor (7) is arranged for controlling the transmitter (3) for repeatedly broadcasting the status signal (Ss) each instance that the clock time (T) coincides with the broadcast time (T0,T1).

16. Mail piece (1) integrally comprising
- an identifier (14) arranged for indicating a destination and/or ownership of the mail piece (1);
- an enclosure (2) arranged for carrying contents of the mail piece (1);
- a transmitter (3) arranged for wireless broadcasting of a status signal (Ss);
- a battery (4) arranged for powering the transmitter (3);
- a status sensor (5,6) arranged for sensing a change in status (Uo,Uid) of the mail piece (1); and
- a processor (7) arranged for receiving input from the status sensor (5,6) and modifying the status signal (Ss) by including status information (So,Sid) indicating the change in status (Uo,Uid); wherein the mail piece further comprises
- a clock (8) operatively linked to the processor (7) for providing a progressing clock time (T); and
- a memory (9) operatively linked to the processor (7) for storing and retrieving a broadcast time (T0, T1) calculated according to a broadcast time interval (Tb); wherein
the processor (7) is arranged for controlling the transmitter (3) for repeatedly broadcasting the status signal (Ss) each instance that the clock time (T) coincides with the broadcast time (T0,T1).

17. Medicine wrapper (1) integrally comprising
- an identifier (14) arranged for indicating a destination and/or ownership of the medicine wrapper (1);
- an enclosure (2) arranged for carrying contents of the medicine wrapper (1);
- a transmitter (3) arranged for wireless broadcasting of a status signal (Ss);
- a battery (4) arranged for powering the transmitter (3);
- a status sensor (5,6) arranged for sensing a change in status (Uo,Uid) of the medicine wrapper (1); and
- a processor (7) arranged for receiving input from the status sensor (5,6) and modifying the status signal (Ss) by including status information (So,Sid) indicating the change in status (Uo,Uid); wherein the medicine wrapper further comprises
- a clock (8) operatively linked to the processor (7) for providing a progressing clock time (T); and
a memory (9) operatively linked to the processor (7) for storing and retrieving a broadcast time (T0, T1) calculated according to a broadcast time interval (Tb);
wherein the processor (7) is arranged for controlling the transmitter (3) for repeatedly broadcasting the status signal (Ss) each instance that the clock time (T) coincides with the broadcast time (T0,T1).
